(19) **Europäisches Patentamt / European Patent Office / Office européen des brevets**

(11) **EP 4 708 765 A1**

(12) **EUROPEAN PATENT APPLICATION**

(43) Date of publication:
**11.03.2026 Bulletin 2026/11**

(21) Application number: **25197010.9**

(22) Date of filing: **20.08.2025**

(51) International Patent Classification (IPC):
**H04L 9/08** (2006.01)   **H04L 9/00** (2022.01)

(52) Cooperative Patent Classification (CPC):
**H04L 9/0861; H04L 9/002;** H04L 2209/50

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.08.2024 KR 20240117017**
**08.07.2025 KR 20250091679**

(71) Applicant: **Samsung SDS Co., Ltd.**
**Seoul 05510 (KR)**

(72) Inventors:
• **Kim, Seongkwang**
  05510 Seoul (KR)
• **Han, Kyoohyung**
  05510 Seoul (KR)
• **Lee, Byeonghak**
  05510 Seoul (KR)

(74) Representative: **Grünecker Patent- und Rechtsanwälte**
**PartG mbB**
**Leopoldstraße 4**
**80802 München (DE)**

(54) **METHOD FOR MULTIPLE APPLICATIONS OF OBLIVIOUS PSEUDO-RANDOM FUNCTION PROTOCOL BETWEEN RECEIVER AND SENDER BASED ON OBLIVIOUS KEY-VALUE STORE ALGORITHM, AND DEVICE USING SAME**

(57) The present disclosure relates to a method for multiple applications of an oblivious pseudo-random function protocol between a receiver and a sender based on an oblivious key-value store algorithm, and a terminal device using the same, and a method for multiple applications of an oblivious pseudo-random function protocol according to an embodiment of the present disclosure may include the steps of: inputting, by the receiver, a first key-value pair between target data and hash data corresponding to the target data to receive first PRF data generated according to a first OPRF protocol based on the OKVS; and inputting, by the receiver, a second key-value pair between the target data and the first PRF data to receive second PRF data generated according to a second OPRF protocol based on the OKVS.

[Fig.5]

EP 4 708 765 A1

**Description**

CROSS-REFERENCE TO RELATED APPLICATION(S)

This application claims priority under 35 U.S.C. 119 to Korean Patent Application Nos. 10-2024-0117017, filed on August 29, 2024, and 10-2025-0091679, filed on July 8, 2025, in the Korean Intellectual Property Office, the disclosures of which are incorporated by reference in their entirety.

BACKGROUND OF THE INVENTION

**1.** Field of the invention

The present disclosure relates to a method for multiple applications of an oblivious pseudo-random function protocol capable of effectively preventing attacks on an oblivious pseudo-random function (OPRF) protocol, based on an oblivious key-value store (OKVS) algorithm, while reducing the amount of communication required between a receiver and a sender, and a terminal device using the same.

2. Description of the Prior Art

In recent years, due to various regulations concerning the protection of personal information, privacy-enhancing technologies (PETs) that perform necessary analysis while preserving personal information have attracted increasing attention.

Among privacy-enhancing technologies, the private set intersection (PSI) protocol is a protocol that enables two terminals to compute the intersection of data without revealing their own data to each other. Currently, the PSI protocol is being utilized in various applications.

Additionally, the oblivious pseudo-random function (OPRF) protocol is a protocol that enables a receiver to obtain a pseudo-random value $\{F(x_1),...,F(x_n)\}$ for its input data $\{x_1, ... , x_n\}$, and enables a sender to obtain a pseudo-random function F.

In general, the PSI protocol may be implemented based on the OPRF, and in this case, it may be implemented in a manner in which the sender generates pseudo-random function values for all elements of its own set utilizing the pseudo-random function, and then transmits it to the receiver.

SUMMARY OF THE INVENTION

The present disclosure has been made in order to solve the problems in the prior art and an aspect of the present disclosure is to provide a method for multiple applications of an oblivious pseudo-random function protocol between a receiver and a sender, based on an oblivious key-value store algorithm, which is capable of preventing a malicious receiver from performing a random substitution attack to unlawfully obtain information from a sender in an OKVS-based OPRF protocol, and a terminal device using the same.

The present disclosure is to provide a method for multiple applications of an oblivious pseudo-random function protocol between a receiver and a sender, based on an oblivious key-value store algorithm, which is capable of effectively preventing a malicious receiver from performing a random substitution attack and preventing a sharp increase in the amount of communication required between the receiver and the sender in an OKVS-based OPRF protocol, and a terminal device using the same.

A method for multiple applications of an oblivious pseudo-random function (OPRF) protocol between a receiver and a sender based on an oblivious key-value store (OKVS) algorithm according to an embodiment of the present disclosure may include: inputting, by the receiver, a first key-value pair between target data and hash data corresponding to the target data to receive first PRF data generated according to a first OPRF protocol based on the OKVS; and inputting, by the receiver, a second key-value pair between the target data and the first PRF data to receive second PRF data generated according to a second OPRF protocol based on the OKVS.

Here, the method for multiple applications of an oblivious pseudo-random function protocol according to an embodiment of the present disclosure may further include configuring a first bit count, which is the number of bits of the hash data, and a second bit count, which is the number of bits of the first PRF data, based on a probability bound for information leakage in the first OPRF protocol and the second OPRF protocol.

Here, in the configuring, the first bit count and the second bit count may be configured such that the sum of the first bit count and the second bit count becomes a minimum value.

Here, in the configuring, using a first probability bound indicating a probability that, when an attacker generates up to q pieces of arbitrarily computed hash data, $n_1$ pieces of arbitrarily computed hash data or more among them match an OKVS decoding result, the first bit count to keep the first probability bound at or below a threshold may be configured.

Here, when the number of the first key-value pairs input by the receiver is n, the $n_1$ has a value greater than n ($n_1 > n$).

Here, in the configuring, the number of bits $\ell_1$ of the hash data to keep the first probability bound at or below the threshold may be obtained when q, $n_1$, and m are given for the equation below

$$p_1 \leq \frac{\binom{q}{n_1}}{2^{(n_1-m)\ell_1}}$$

where $p_1$ is the first probability bound, q is a maximum number of pieces of arbitrarily computed hash data that an attacker is able to generate using hash operation, $n_1$ is the number of pieces of arbitrarily computed hash data that matches the OKVS decoding result, m is the number of rows of an OKVS matrix generated in the first OPRF protocol, and $\ell_1$ is the number of bits of the hash data.

Here, q that is the maximum number of pieces of arbitrarily computed hash data may be configured according to a preset computational security parameter, and the threshold may be configured according to a statistical security parameter.

Here, in the configuring, a minimum value of the number of bits of the hash data to keep the first probability bound at or below the threshold may be obtained, and the minimum value may be configured as the first bit count.

Here, in the configuring, using a second probability bound indicating a probability that, when an attacker generates up to $n_1$ pieces of arbitrarily computed first PRF data, $n_2$ pieces of arbitrarily computed first PRF data or more among them match an OKVS decoding result, the second bit count to keep the second probability bound at or below a threshold may be configured.

Here, the $n_2$ may have a value smaller than the $n_1$.

Here, in the configuring, the number of bits $\ell_2$ of the first PRF data to keep the second probability bound at or below the threshold may be obtained when $n_1$, $n_2$, and m are given for the equation below,

$$p_2 \leq \frac{\binom{n_1}{n_2}}{2^{(n_2-m)\ell_2}}$$

where $p_2$ is the second probability bound, $n_1$ is a maximum number of pieces of arbitrarily computed first PRF data that an attacker is able to generate, $n_2$ is the number of pieces of arbitrarily computed first OPRF data that matches the OKVS decoding result, m is the number of rows of an OKVS matrix generated in the second OPRF protocol, and $\ell_2$ is the number of bits of the first OPRF data.

Here, in the configuring, a minimum value of the number of bits of the first PRF data to keep the second probability bound at or below the threshold may be obtained, and the minimum value may be configured as the second bit count.

Here, in the configuring, the first bit count and the second bit count may be obtained according to respective values of $n_1$ while changing $n_1$, and the $n_1$, the first bit count, and the second bit count may be configured so that the sum of the first bit count and the second bit count becomes a minimum value.

Here, the method for multiple applications of an oblivious pseudo-random function protocol according to an embodiment of the present disclosure may further include inputting, by the receiver, a third key-value pair between the target data and the second PRF data to receive third PRF data generated according to a third OPRF protocol based on the OKVS.

A computer program according to an embodiment of the present disclosure may be stored in a computer-readable medium for executing, in conjunction with hardware, the method for multiple applications of an oblivious pseudo-random function protocol described above.

A receiver according to an embodiment of the present disclosure may include a processor, and may be configured to repeatedly perform an oblivious pseudo-random function (OPRF) protocol between the receiver and a sender based on an oblivious key-value store (OKVS) algorithm, wherein the processor may be configured to: input a first key-value pair between target data and hash data corresponding to the target data to receive first PRF data generated according to a first OPRF protocol based on the OKVS; and input a second key-value pair between the target data and the first PRF data to receive second PRF data generated according to a second OPRF protocol based on the OKVS.

Here, the processor may be further configured to configure a first bit count, which is the number of bits of the hash data, and a second bit count, which is the number of bits of the first PRF data, based on a probability bound for information leakage in the first OPRF protocol and the second OPRF protocol.

Here, in the configuring, the first bit count and the second bit count may be configured such that the sum of the first bit count and the second bit count becomes a minimum value.

Here, in the configuring, using a first probability bound indicating a probability that, when an attacker generates up to q pieces of arbitrarily computed hash data, $n_1$ pieces of arbitrarily computed hash data or more among them match an OKVS decoding result, the first bit count to keep the first probability bound at or below a threshold may be configured.

Here, in the configuring, using a second probability bound indicating a probability that, when an attacker generates up to $n_1$ pieces of arbitrarily computed first PRF data, $n_2$ pieces of arbitrarily computed first PRF data or more among them match an OKVS decoding result, the second bit count to keep the second probability bound at or below a threshold may be configured.

It should be noted that the above-mentioned solutions to the technical problems do not enumerate all the features of the present disclosure. Various features, advantages, and effects of the present disclosure will be more clearly understood from the following detailed embodiments.

According to a method for multiple applications of an oblivious pseudo-random function protocol between a receiver and a sender based on an oblivious key-value store algorithm according to an embodiment of the present disclosure, and a terminal device using the same, it is possible to prevent a malicious receiver from obtaining information from the sender through a random substitution attack by repeatedly applying the OPRF protocol. In addition, it is possible to prevent a rapid increase in the amount of communication required between the receiver and the sender while preventing the attack.

However, the effects obtainable from the method for multiple applications of an oblivious pseudo-random function protocol between a receiver and a sender based on an oblivious key-value store algorithm according to embodiments of the present disclosure, and a terminal device using the same are not limited to those mentioned above, and other effects that are not mentioned will be clearly understood by those skilled in the art to which the present disclosure belongs from the description below.

BRIEF DESCRIPTION OF THE DRAWINGS

The above and other aspects, features and advantages of the present disclosure will be more apparent from the following detailed description taken in conjunction with the accompanying drawings, in which:

FIG. 1 is a schematic diagram illustrating a PSI protocol between a receiver and a sender according to an embodiment of the present disclosure;
FIG. 2 is a schematic diagram illustrating a PSI protocol using an OPRF according to an embodiment of the present disclosure;
FIG. 3 is a schematic diagram illustrating the operation of a PSI protocol according to an embodiment of the present disclosure;
FIG. 4 is a diagram illustrating an example of an attack on a PSI protocol according to an embodiment of the present disclosure;
FIG. 5 is a schematic diagram illustrating multiple applications of an OPRF between a receiver and a sender according to an embodiment of the present disclosure;
FIG. 6 is a schematic diagram illustrating an OKVS-based OPRF protocol according to an embodiment of the present disclosure;
FIG. 7 is a block diagram illustrating a computing environment suitable for use in exemplary embodiments of the present disclosure; and
FIG. 8 is a flowchart illustrating a method for multiple applications of an oblivious pseudo-random function protocol between a receiver and a sender based on an oblivious key-value store algorithm according to an embodiment of the present disclosure.

DETAILED DESCRIPTION OF THE EXEMPLARY EMBODIMENTS

Hereinafter, the embodiments disclosed in this specification will be described in detail with reference to the attached drawings. Regardless of reference numerals, identical or similar components will be assigned the same reference numerals, and redundant descriptions thereof will be omitted. The terms "module" and "unit" used for components in the following description are assigned or used interchangeably only in consideration of the ease of drafting the specification, and do not have distinct meanings or roles in themselves. That is, the term "unit" used in the present disclosure indicates a hardware component such as software, FPGA, or ASIC, and the "unit" performs certain roles. However, the "unit" is not limited to software or hardware. The "unit" may be configured to reside in an addressable storage medium or may be configured to reproduce one or more processors. Accordingly, as an example, "units" include elements such as software elements, object-oriented software elements, class elements, and task elements, processes, functions, properties, procedures, subroutines, segments of program code, drivers, firmware, microcode, circuits, data, databases, data structures, tables, arrays, and variables. The functions provided by the components and "units" may be combined into a smaller number of components and "units" or may be further divided into additional components and "units."

In addition, in describing the embodiments disclosed in this specification, a detailed description of a related known technology, which may obscure the subject matter of the embodiments disclosed in this specification, will be omitted. In addition, the attached drawings are only intended to facilitate easy understanding of the embodiments disclosed in this specification, and the technical idea disclosed in this specification is not limited to the attached drawings, and should be understood to include all modifications, equivalents, or substitutes included in the scope of the disclosure.

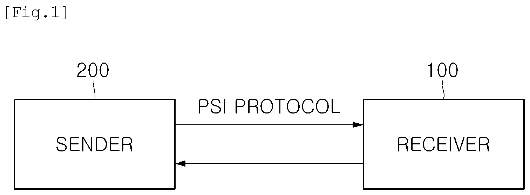

FIG. 1 is a schematic diagram illustrating a PSI protocol between a receiver and a sender according to an embodiment of the present disclosure.

Referring to FIG. 1, a PSI protocol according to an embodiment of the present disclosure may be performed between a receiver 100 and a sender 200.

Hereinafter, the PSI protocol according to an embodiment of the present disclosure will be described with reference to FIG. 1.

The receiver 100 and the sender 200 may be connected using a wired or wireless network, and may perform the PSI (Private Set Intersection) protocol. That is, utilizing the PSI protocol, the receiver 100 and the sender 200 may calculate the intersection between their data without disclosing the data to each other.

Although the receiver 100 and the sender 200 are distinguished herein, they may be divided according to the function performed by the terminal device. That is, each of the receiver 100 and the sender 200 may be implemented utilizing the terminal device, and one terminal device may operate as the receiver 100 or the sender 200 depending on the situation. Depending on the embodiment, the receiver 100 and the sender 200 may be a server and a client, but are not limited thereto.

The terminal device may include a communication module for transmitting and receiving information, a memory for storing programs and protocols, a processor for executing various programs and performing calculations and controls.

The terminal device may be a mobile terminal such as a smartphone, tablet PC, or the like, or may be a stationary terminal such as a desktop or the like. For example, the terminal device may include a mobile phone, a smartphone, a laptop computer, a digital broadcasting terminal, personal digital assistants (PDAs), a portable multimedia player (PMP), a slate PC, a tablet PC, an ultra-book, a wearable device (e.g., a smartwatch, smart glasses, or a head-mounted display (HMD)), or the like.

The network between the receiver 100 and the sender 200 may be a wired network or a wireless network, and, specifically, may include various networks such as a local area network (LAN), a metropolitan area network (MAN), a wide area network (WAN), or the like. In addition, the network may include the well-known World Wide Web (WWW). However, the networks according to the present disclosure are not limited to the networks enumerated above, and may include the well-known wireless data network, the well-known telephone network, the well-known wired or wireless television network, or the like.

The PSI protocol between the receiver 100 and the sender 200 may be implemented using an oblivious pseudo-random function (OPRF). Using the OPRF, the receiver 100 may obtain a pseudo-random value $\{F(x_1), F(x_2), ... , F(x_n)\}$ for its input data $\{x_1, x_2, ... , x_n\}$, and the sender 200 may obtain a pseudo-random function F.

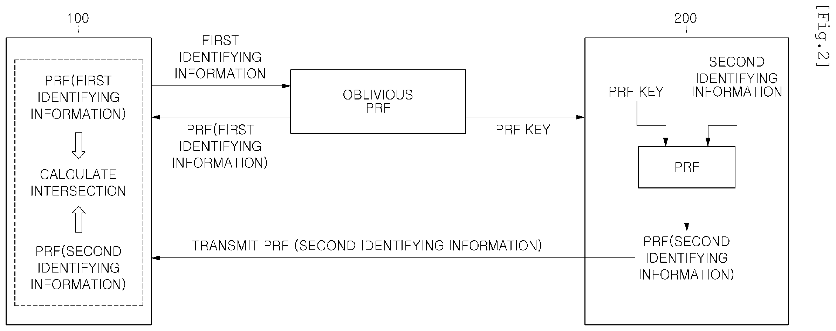

That is, referring to FIG. 2, the receiver 100 may input its first identifying information, and receive "PRF (first identifying information)" through the OPRF, which is first comparison data corresponding to the first identifying information. In addition, a PRF key that defines the PRF (pseudo-random function) used when generating the corresponding "PRF (first identifying information)" may be provided to the sender 200. Accordingly, the sender 200 may generate a PRF function using the PRF key, and then input its second identifying information into the PRF function, thereby generating "PRF (second identifying information)" that is second comparison data.

Afterwards, the sender 200 may provide the "PRF (second identifying information)" to the receiver 100, and the receiver 100 may compare the "PRF (first identifying information)" with the "PRF (second identifying information)" to determine whether or not an intersection exists. That is, since the "PRF (first identifying information)" and the "PRF (second identifying information)" are generated based on the same PRF function, if the first identifying information and the second identifying information are the same, the "PRF (first identifying information)" and the "PRF (second identifying information)" also have the same value. Accordingly, the receiver 100 may compare the "PRF (first identifying information)" with the "PRF (second identifying information)", thereby finding the intersection between the first identifying information and the second identifying information.

Since the receiver 100 is unable to know PRF key information, the receiver 100 may regard the "PRF (second identifying information)" provided from the sender 200 as a random value. That is, the receiver 100 is unable to identify second identifying information from the "PRF (second identifying information)". In addition, since the sender 200 receives only the PRF key, it is impossible to identify any information about first identifying information of the receiver 100. As described above, it is possible to implement the PSI protocol for calculating, using the OPRF protocol, the intersection between data without the receiver 100 and the sender 200 disclosing their own data.

Meanwhile, the OPRF may be implemented based on an oblivious key-value store (OKVS) such as PRTY20 (Pinkas, Benny, et al. "PSI from PaXoS: fast, malicious private set intersection." Annual International Conference on the Theory and Applications of Cryptographic Techniques. Cham: Springer International Publishing, 2020.) or RS21 (Rindal, Peter, and Phillipp Schoppmann. "VOLE-PSI: fast OPRF and circuit-PSI from vector-OLE." Annual International Conference on the Theory and Applications of Cryptographic Techniques. Cham: Springer International Publishing, 2021), and in this case, advantageous effects such as memory reduction, communication reduction, speed improvement, or batch processing optimization may be obtained. However, if an attacker performs an attack such as brute-force or decoding experiment using the receiver 100, it may cause a problem in which the attacker may further obtain identifying information possessed by the sender 200. That is, a malicious receiver 100 is able to perform an attack to extract n' pieces of PRF data, which is more than the number of pieces n of identifying information input through the PSI protocol.

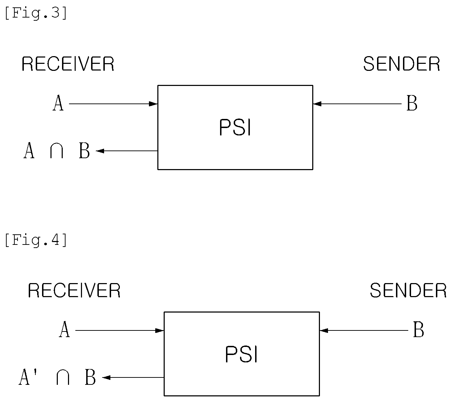

Referring to FIG. 3, in a general PSI protocol, the receiver 100 may obtain PRF (A) for A by providing identifying information A, and the sender 200 may provide PRF (B) for B to the receiver 100. In this case, the receiver 100 may compare PRF (A) with PRF (B), thereby obtaining the intersection of only A and B.

However, in the case of the PSI protocol utilizing OPRF based on the OKVS as illustrated in FIG. 4, although the receiver 100 provides identifying information of A, it is also possible to obtain PRF (A') for A' that includes additional identifying information in case of a malicious attack. Here, since A $\subset$ A' is satisfied, the receiver 100 is able to obtain additional identifying information possessed by the sender 200 by comparing the remaining PRF values, excluding PRF (A), with PRF (B).

As described above, a method of minimizing the number of pieces of identifying information that the attacker is able to further obtain may be considered in order to suppress an attack in which the attacker obtains additional identifying information using the receiver 100. That is, the parameters of the OPRF protocol may be adjusted such that the maximum number (n') of pieces of identifying information that the attacker is able to obtain is sufficiently close to the number (n) of pieces of identifying information that the attacker inputs.

However, this case may cause a problem in which the amount of communication required for the PSI protocol between the receiver 100 and the sender 200 increases rapidly. That is, in the PSI protocol using the OKVS-based OPRF, the receiver 100 may generate hash data by inputting identifying information into a hash function, and the receiver 100 processes hash data and transmits it to the sender 200. In this case, in order to maintain the security of the OPRF protocol and make n and n' sufficiently close, the number of bits of hash data needs to be increased. If the number of bits of hash data increases, the amount of communication between the receiver 100 and the sender 200 may also increase proportionally. Accordingly, when n' is configured to closely approximate n in order to prevent an attacker from performing an attack to obtain additional identifying information, a problem may occur in which the amount of communication increases exponentially.

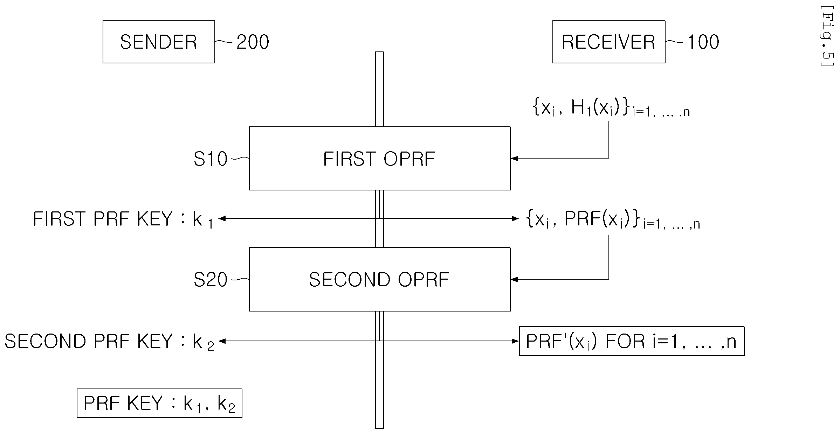

Accordingly, an embodiment of the present disclosure provides a method for effectively preventing an attacker from further obtaining PRF values in the OKVS-based OPRF protocol while reducing the required amount of communication. Meanwhile, although an example of the OKVS-based OPRF being applied to a PSI protocol will be described hereinafter, the present disclosure is not limited thereto, and may be applied to various fields such as user authentication, search, or the like, in addition to the PSI protocol. Hereinafter, the operation of the receiver 100 and the sender 200 according to an embodiment of the present disclosure will be described with reference to FIG. 5.

Referring to FIG. 5, the receiver 100 and the sender 200 may generate PRF keys $k_1$ and $k_2$ and PRF data PRF' $(x_i)$ by sequentially applying a first OPRF protocol S10 and a second OPRF protocol S20 based on the OKVS. That is, the receiver 100 and the sender 200 may apply the OPRF protocol multiple times, and utilize second PRF data PRF' $(x_i)$ ultimately generated for the PSI protocol or the like.

The receiver 100 may collect target data X = $(x_1, \ldots , x_n)$ such as identifying information, and input the collected target data into a hash function $H_1$, thereby generating corresponding hash data $H_1(X) = (H(x_1), \ldots , H(x_n))$. Thereafter, the receiver 100 may generate a first key-value pair $\{xi, H_1(x_i)\}_{i=1,\ldots,n}$ from the target data and the hash data, and perform the first OPRF protocol S10 by inputting the first key-value pair.

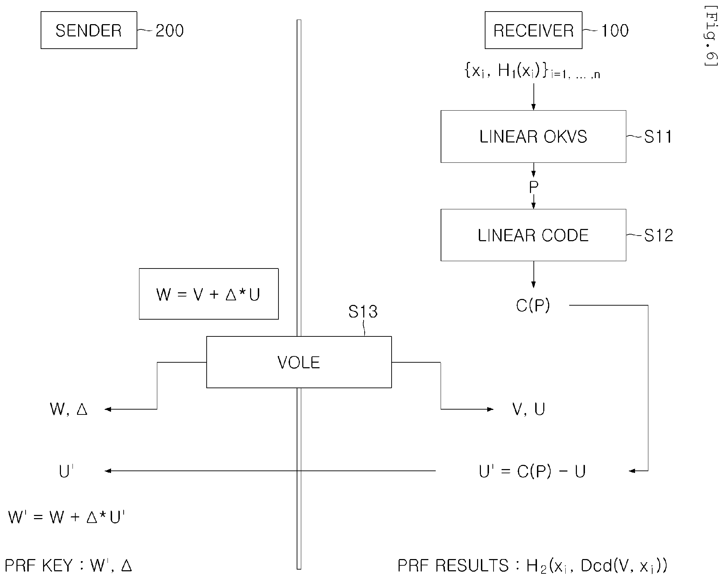

Referring to FIG. 6, the receiver 100 may perform linear OKVS encoding to perform the OPRF (S11). That is, the receiver 100 may generate a first OKVS matrix $P_1$ by applying an OKVS encoding algorithm to the first key-value pair. Here, $P_1 = OKVS.Ecd(X, H_1(X))$.

For example, the receiver 100 may obtain a first OKVS matrix $P_1$ by solving the following equation.

$$\begin{bmatrix} -row(x_1)- \\ \vdots \\ -row(x_n)- \end{bmatrix} \cdot P_1 = \begin{bmatrix} H_1(x_1) \\ \vdots \\ H_1(x_n) \end{bmatrix}$$

Here, row($x_n$) is generated by converting target data $x_n$ into a vector space, and may indicate the slot to which the hash data $H_1(x_n)$ for obtaining target data $x_n$ is mapped in the first OVKS matrix $P_1$. That is, it is possible to obtain

corresponding hash data $(H_1(x_1), \ldots, H(x_n))$ by matrix-multiplying each row$(x_n)$ and first OKVS matrix $P_1$. row$(x_n)$ may be a sparse binary vector with a small number of 1 at random positions, satisfying $\mathrm{row}(\cdot) : \{0,1\}^* \to \mathbb{F}_2^m$ for m (e.g., m = 1.3·n), which is greater than n.

The hash function $H_1$ may output hash data of $\ell_1$ bits, and in this case, the first OKVS matrix $P_1$ may be generated as a binary matrix with a size of $m \times \ell_1$. Here, m = (1+ε)·n is established, and ε may be a real number greater than or equal to 0.

That is, OKVS encoding data for the first key-value pair may be generated to have $\ell_1$ bits and then stored in the row of the OKVS matrix $P_1$. In this case, (1+ε)·n pieces of first encoding data may be generated, which is more than n corresponding to the number of the first key-value pairs. In general, the number of pieces of encoding data may be determined depending on encoding efficiency and storage space, and the number of pieces of encoding data added to the first OKVS matrix $P_1$ may be determined by ε. ε is a parameter representing an overhead ratio, and may be configured as 0.1 to 0.3.

When the first OKVS matrix $P_1$ is generated through the OKVS encoding (S11), the receiver 100 may apply a linear code to the first OKVS matrix $P_1$ (S12). That is, the receiver 100 may convert the first OKVS matrix $P_1$ into a linear matrix $C(P_1)$ including a linear code capable of linear operation by applying a linear code encoder to the first OKVS matrix $P_1$. However, depending on the embodiment, the application of the linear code may be omitted, and the first OKVS matrix $P_1$ may be utilized as it is.

Afterwards, in order to perform PRF (pseudo-random function) operation without revealing the content of the first OKVS matrix $P_1$ to the sender 200, the receiver 100 may utilize a primitive such as VOLE (vector oblivious linear evaluation) or the like (S13). Although the case of utilizing VOLE is exemplified herein, depending on the embodiment, various primitives such as OT (oblivious transfer), LPN-based VOLE, random linear code VOLE, or the like may be utilized in addition to VOLE.

As illustrated in FIG. 6, when applying VOLE, a preset linear equation W = V + Δ*U may be given, and the sender 200 may generate a vector or scalar factor V, Δ, and W of the preset linear equation, based on VOLE, and the receiver 100 may provide an input U for the corresponding linear equation. Here, V may be a random mask created by the sender 200, Δ may be a PRF key, U may be an input vector input by the receiver 100, and W may be a masked value that the sender 200 calculates and transmits to the receiver 100.

As illustrated in FIG. 6, instead of directly utilizing the linear matrix C(P) as an input vector U for the linear equation W = V + Δ*U, the receiver 100 may convert the same into U' = C(P) - U and provide U' as an input vector. That is, when the linear matrix C(P) is directly provided to the sender 200, the first OKVS matrix $P_1$ may be exposed to the sender 200, so it may be converted into U' = C(P) - U and then input. In this case, U may be a previously used input vector. Additionally, the sender 200 may use the previously used W, instead of the random mask V, for the linear equation, and in this case, the linear equation corresponds to W' = W + Δ*U'. Accordingly, W' = W + Δ*U' = (V + Δ*U) + Δ*(C(P) - U) = V + Δ*C(P) is established.

Meanwhile, a first PRF function PRF(y) may be defined as follows.

```
PRF(y) := H₂(y, Dcd(W',y) - Δ*C(H₁(y)))

       = H₂(y, Dcd(V,y) + Δ*Dcd(C(P),y) - Δ*C(H₁(y)))

       = H₂(y, Dcd(V,y) + Δ*C(Dcd(P,y)) - Δ*C(H₁(y)))

       = H₂(y, Dcd(V,y) + Δ*C(H₁(y)) - Δ*C(H₁(y))  (if y = xᵢ for

   some i)

       = H₂(y, Dcd(V,y))
```

Here, the function $H_2(\cdot)$ may be a hash function, and in the above equation, Dcd(P, y) = $H_1$(y) only when y = $x_i$, so PRF(y) = $H_2$(y, Dcd(V, y) is satisfied. Therefore, the receiver 100 may calculate PRF(y) for all values of y where Dcd(P, y) = $H_1$(y). Since W' and Δ correspond to PRF keys in the first PRF function, the operation may be performed by the sender 200, and the receiver 100 may become aware of the case where y = $x_i$ thereafter, so the receiver 100 may receive first PRF data $H_2(x_i, Dcd(V, x_i))$ from the first PRF function.

As described above, if the first OPRF protocol S10 is performed, as illustrated in FIG. 5, the sender 200 may receive a first OPRF key $k_1$ for specifying the first OPRF function performed in the first OPRF protocol, and the receiver 100 may receive first OPRF data PRF($x_i$) that is a result generated using the first OPRF function, based on the first key-value pair.

Thereafter, the receiver 100 may perform a second OPRF protocol S20 using the first OPRF data PRF($x_i$) (S20). That is, a second key-value pair $\{x_i, PRF(x_i)\}_{i=1,\ldots,n}$ may be generated from the target data $x_i$ and first OPRF data PRF($x_i$), and then the second OPRF protocol S20 may be performed by inputting the second key-value pair. Although the second OPRF protocol S20 is different in that the second key-value pair includes first OPRF data PRF($x_i$) instead of the hash data $H_1(x_i)$, second PRF data PRF' ($x_i$) may be generated through a process substantially the same as the first OPRF protocol S10 described above.

When the second OPRF protocol S20 is performed, the sender 200 may receive a second OPRF key $k_2$ for specifying a second OPRF function performed in the second OPRF protocol, and the receiver 100 may receive second OPRF data PRF' ($x_i$) that is a result generated using the second OPRF function, based on the second key-value pair.

Conclusively, the sender 200 may receive OPRF keys $k_1$ and $k_2$ for the first OPRF function and the second OPRF function, respectively, and the receiver 100 may receive second OPRF data PRF'($x_i$). Thereafter, the receiver 100 may perform the PSI protocol, based on the second OPRF data PRF'($x_i$).

Although the first OPRF protocol S10 is designed such that the attacker is able to collect a large amount of first OPRF data through an attack, the second OPRF protocol S20 may reduce the maximum number of pieces of data that the attacker is able to further obtain, compared thereto, because the attacker must collect second OPRF data again on the basis of the obtained first OPRF data. Accordingly, it is possible to enable the number ($n_2$) of pieces of second OPRF data that the attacker is able to further obtain through an attack to approximate the number (n) of pieces of input data. In addition, although two OPRF protocols S10 and S20 are performed herein, the number of bits of data transmitted between the receiver 100 and the sender 200 may be reduced, thereby reducing the actual required communication volume.

Although FIG. 5 exemplifies a case where the first OPRF protocol S10 and the second OPRF protocol S20 are performed to repeat the OPRF protocol twice, it is also possible to add more repetitions of the OPRF protocol depending on the embodiment. For example, in the case of three repetitions, the receiver 100 may generate a third key-value pair between the target data and the second PRF data in a third OPRF protocol and input the third key-value pair into the third OPRF protocol. Cases where the OPRF protocol is repeated four or five times may be performed in the same manner.

Meanwhile, in order to effectively perform defense against attacks and reduce the amount of communication through multiple applications of the first OPRF protocol S10 and the second OPRF protocol S20, it is necessary to appropriately configure the parameters in the respective protocols S10 and S20. To this end, the manager of the OPRF protocol or PSI protocol may configure respective parameters using the receiver 100 or the sender 200.

Specifically, the probability bound for information leakage in the first OPRF protocol S10 and the second OPRF protocol S20 may be obtained, and the parameters may be configured based on each probability bound.

A first probability bound for the first OPRF protocol may be the probability that, when the attacker repeatedly executes a hash function up to q times to generate q pieces of arbitrarily computed hash data, $n_1$ pieces of arbitrarily computed hash data or more among them match the OKVS decoding result. That is, since it is possible to extract the first PRF data only when $Dcd(P_1, y) = H_1(y)$ is satisfied in the first PRF function, the probability bound for the first OPRF function may be obtained by obtaining the probability that the arbitrarily computed hash data randomly generated by the attacker matches the OKVS decoding result. In order to maintain security, it is necessary to ensure that the first probability bound is at least equal to or less than a preset threshold, and parameters may be configured for this.

Specifically, the first probability bound may be obtained as follows.

$$p_1 \leq \frac{\binom{q}{n_1}}{2^{(n_1-m)\ell_1}}$$

Here, $p_1$ is the first probability bound, q is the maximum number of pieces of arbitrarily computed hash data that the attacker is able to generate using hash operation, $n_1$ is the number of pieces of arbitrarily computed hash data that matches the OKVS decoding result, m is the number of rows of the OKVS matrix generated in the first OPRF protocol, and $\ell_1$ corresponds to the number of bits of the hash data. q may be configured according to the computational security parameter $\kappa$, and in this case, $q = 2^\kappa$. Here, $\kappa$ may be configured as 128 or 256, but is not limited thereto. In addition, the threshold may be configured according to the statistical security parameter $\lambda$, and in this case, the right side of the above equation may be configured to be less than or equal to the threshold $2^{-\lambda}$. $\lambda$ may be configured as, for example, 40.

When q, $n_1$, and m are given as described above, the number of bits $\ell_1$ of hash data to keep the first probability bound at or below the threshold may be obtained. q is related to the attack success probability depending on the attacker's computational ability, and may generally be configured as about 128, and $n_1$ is the maximum number of pieces of first PRF data that the attacker is able to further obtain, and the administrator may arbitrarily configure the number $n_1$ to limit the maximum number of pieces of first PRF data that the attacker is able to further obtain through the attack. m is the number of rows of the OKVS matrix, and may be a fixed value of $(1 + \varepsilon) \cdot n$.

When the threshold (e.g., $2^{-40}$) is configured, since the respective q, $n_1$, and m are predetermined values, the

number of bits $\ell_1$ of hash data to keep the first probability bound $p_1$ at or below the threshold may be determined. In this case, as $n_1$ is configured to approximate n, it is also close to m, so the denominator of the right side in the above equation becomes smaller. Therefore, in order to keep the first probability bound $p_1$ at or below the threshold, it is necessary to configure $\ell_1$ to a very large value. In this case, the number of bits of hash data may increase, so the amount of communication for the OPRF protocol may also increase significantly.

However, in an embodiment of the present disclosure, $n_1$ may be configured to be much larger than n (for example, $n_1$ may be at least 10 times larger than n) so that $n_1 \gg n$ is established. In this case, $\ell_1$ to keep the first probability bound $p_1$ at or below the threshold for the $n_1$ may have a relatively small value. For example, the minimum value of $\ell_1$ that keeps the first probability bound $p_1$ at or below the threshold may be obtained, and then the minimum value may be configured as a first bit count. In this case, since the number of bits of the hash data is configured as a relatively small value, it is possible to reduce the amount of communication between the receiver 100 and the sender 200 for performing the first OPRF protocol.

Meanwhile, since $n_1$ is configured as a relatively large value in the first OPRF protocol S10, it is possible for an attacker to obtain a large number of pieces of additional first OPRF data through an attack. However, since the second OPRF protocol is further performed in the present disclosure, it is possible to prevent the attacker from further obtaining a large number of second OPRF data used in the actual PSI protocol, etc.

Specifically, a second probability bound for the second OPRF protocol S20 may be the probability that, when the attacker repeatedly executes the first OPRF protocol up to $n_1$ times to generate $n_1$ pieces of arbitrarily computed first PRF data, $n_2$ pieces of arbitrarily computed first PRF data or more among them match the OKVS decoding results. That is, in the second PRF function, it is possible to extract second PRF data only when $Dcd(P_2, y) = H_2(y)$ is satisfied. Therefore, it is possible to obtain the probability bound for the second OPRF function by obtaining the probability that the arbitrarily computed first PRF data arbitrarily generated by the attacker matches the OKVS decoding results. In order to maintain security, it is necessary to ensure that the second probability bound is at least equal to or less than a preset threshold, and a parameter may be configured for this.

Specifically, the second probability bound may be obtained as follows.

$$p_2 \leq \frac{\binom{n_1}{n_2}}{2^{(n_2-m)\ell_2}}$$

Here, $p_2$ is the second probability bound, $n_1$ is the maximum number of pieces of arbitrarily computed first PRF data that the attacker is able to generate, $n_2$ is the number of pieces of arbitrarily computed first OPRF data that matches the OKVS decoding result, m is the number of rows of the OKVS matrix generated in the second OPRF protocol, and $\ell_2$ may be the number of bits of the first OPRF data. In this case, according to the given $n_1$, $n_2$, and m, the number of bits $\ell_2$ of the first PRF data to keep the second probability bound at or below the threshold may be obtained.

Here, $n_1$ corresponds to the value configured in the first probability bound, and $n_2$ is the maximum number of pieces of second PRF data that the attacker is able to further obtain, and the administrator may arbitrarily configure the number $n_2$. In this case, $n_2$ may be configured as a value smaller than $n_1$. m is the number of rows of the OKVS matrix, which may be a fixed value of $(1 + \varepsilon) \cdot n$. Since the number of pieces of target data is the same as n between the first OPRF protocol S10 and the second OPRF protocol S20, m may have the same value as in the first probability bound.

Therefore, when the threshold (e.g., $2^{-40}$) is configured, since the respective $n_1$, $n_2$, and m are predetermined values, the number of bits $\ell_2$ of the first PRF data to keep the second probability bound $P_2$ at or below the threshold may be determined. In order to reduce the amount of communication, it is necessary to minimize the number of bits $\ell_2$ of the first PRF data, so it is also possible to obtain the minimum value of the number of bits $\ell_2$ of the first PRF data that keeps the second probability bound $P_2$ at or below the threshold, and configure the minimum value as a second bit count.

In addition, according to an embodiment of the present disclosure, since both the first OPRF protocol S10 and the second OPRF protocol S20 must be executed, it is necessary to reduce both the communication amount in the first OPRF protocol S10 and the communication amount in the second OPRF protocol S20. That is, it is necessary to implement such that the sum of the first bit count $\ell_1$, which is the number of bits of the hash data, and the second bit count $\ell_2$ of the first PRF data becomes the minimum value. In this case, the first bit count $\ell_1$ and the second bit count $\ell_2$ according to respective values of $n_1$ may be obtained while changing $n_1$, and here, $n_1$, the first bit count $f_1$, and the second bit count $\ell_2$ for which $(\ell_1 + \ell_2)$ is the minimum value may be obtained and configured as parameters of the first OPRF protocol S10 and the second OPRF protocol S20, respectively.

Meanwhile, in cases where n' is designed to closely approximate n while generating PRF data by performing the OPRF protocol once as in the past, the required communication amount may be calculated as follows. For example, when the number (n) of pieces of target data is $2^{20}$, the number ($n_1$) of pieces of PRF data that the attacker is able to further obtain is $1.326 \cdot n$, $\varepsilon = 0.3$, $\kappa = 128$, and $\lambda = 40$, the probability bound (p) may be obtained as follows.

$$p \leq \frac{\binom{q}{N}}{2^{(N-m)\ell}}$$

That is, if the required number of bits $\ell$ of hash data is calculated based on the probability bound p, the number of bits $\ell$ of hash data may be obtained as 5562. Since the amount of communication required in the OPRF protocol is proportional to the number of bits $\ell$ of hash data, the communication amount may be significantly large in the case of 5562 bits.

On the other hand, when applying the first OPRF protocol and the second OPRF protocol in multiples, as in an embodiment of the present disclosure, the amount of communication proportional to the sum $(\ell_1 + \ell_2)$ of the number of bits $\ell_1$ of hash data and the number of bits $\ell_2$ of first PRF data may be required.

Specifically, if the same example is applied, the number (n) of pieces of target data may be $2^{20}$, the number ($n_2$) of pieces of second PRF data that the attacker is able to obtain in the second OPRF protocol may be 1.326*n, $\varepsilon = 0.3$, $\kappa = 128$, and $\lambda = 40$. In this case, since the number ($n_1$) of pieces of hash data that the attacker is able to obtain in the first OPRF protocol S10 may be configured in various ways, the required communication amount may be obtained by obtaining the first bit count $\ell_1$ and the second bit count $\ell_2$ for the multiple candidates for $n_1$, respectively, and then finding the case where the sum thereof is the smallest from among them.

For example, 489 candidates for $n_2$ may be generated using $n_2 = floor(1.1 * (1 + \varepsilon) * n)$, $floor(1.11 * (1 + \varepsilon) * n)$, ..., floor $(50.0 * (1 + \varepsilon) * n)$, and the first bit count $\ell_1$ and the second bit count $\ell_2$ may be calculated for each of them. Here, a minimum value may be obtained when the first bit count $\ell_1$ is 176 and the second bit count $\ell_2$ is 100, and the sum of the bit counts corresponds to 276. That is, it may be confirmed that the number of bits of first PRF data ($\ell_2 = 100$) used in the second OPRF protocol S20 is much smaller than the number of bits of hash data ($\ell = 5562$) in the single application. This is due to the fact that the first OPRF protocol S10 has already been performed, so that the offline random substitution attack by the attacker is impossible.

Therefore, when comparing the communication amount in the case of single application of the OPRF protocol with that in the multiple application thereof, since $5562/(176+100) \approx 20$, it may be confirmed that the communication amount may be reduced by about 20 times in the case of multiple application.

Referring to FIG. 5, when $\kappa$ is 128, the attacker is able to perform the hash operation $H_1(\cdot)$ $2^{128}$ times to generate up to $n_1$ pieces of first PRF data ($PRF(x_i)$). However, since at most $n_1$ pieces of first PRF data ($PRF(x_i)$) can be generated, the attacker is capable of only generating at most $n_2$ pieces of second PRF data ($PRF'(x_i)$) in the second OPRF protocol S20. That is, although $n_1$ is larger than n, only $n_2$ pieces of second PRF data ($PRF'(x_i)$), which is less than $n_1$, can be obtained in the actual PSI protocol, so it is possible to effectively reduce the data that the attacker is able to further obtain. In addition, even when $n_2$ is configured to approximate n, it is possible to prevent a sharp increase in the required communication amount.

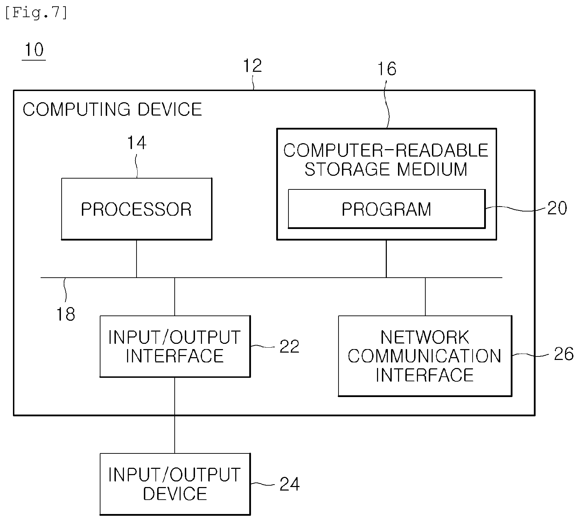

FIG. 7 is a block diagram illustrating a computing environment 10 suitable for use in exemplary embodiments of the present disclosure. In the illustrated embodiment, respective components may have different functions and capabilities from those described below, and may further include other components in addition to those described below.

The illustrated computing environment 10 includes a computing device 12. In an embodiment, the computing device 12 may be the receiver 100 or sender 200.

The computing device 12 includes at least one processor 14, a computer-readable storage medium 16, and a communication bus 18. The processor 14 may cause the computing device 12 to operate according to the embodiments described above. For example, the processor 14 may execute one or more programs stored on a computer-readable storage medium 16. The one or more programs may include one or more computer-executable instructions, which may be configured to cause, when executed by the processor 14, the computing device 12 to perform operations according to the embodiments.

The computer-readable storage medium 16 is configured to store computer-executable instructions, program code, program data, and/or other suitable forms of information. The program 20 stored on the computer-readable storage medium 16 includes a set of instructions executable by the processor 14. In an embodiment, the computer-readable storage medium 16 may be memory (volatile memory, such as random-access memory, nonvolatile memory, or a suitable combination thereof), one or more magnetic disk storage devices, optical disk storage devices, flash memory devices, another type of storage medium capable of being accessed by the computing device 12 and storing desired information, or a suitable combination thereof.

The communication bus 18 interconnects various components of the computing device 12, including the processor 14 and the computer-readable storage medium 16.

The computing device 12 may also include one or more input/output interfaces 22 that provide interfaces for one or more input/output devices 24, and one or more network communication interfaces 26. The input/output interfaces 22 and the network communication interfaces 26 are connected to the communication bus 18. The input/output devices 24 may be connected to other components of the computing device 12 via the input/output interfaces 22. The exemplary input/output devices 24 may include input devices such as a pointing device (mouse, trackpad, etc.), a keyboard, a touch input device (touchpad, touchscreen, etc.), a voice or sound input device, various types of sensor devices and/or photographing devices, and/or output devices such as a display device, a printer, a speaker, and/or a network card. The exemplary input/output device 24 may be included inside the computing device 12 as a component that constitutes the computing device 12, or may be configured as a separate device distinct from the computing device 12 and then connected to the computing device 12.

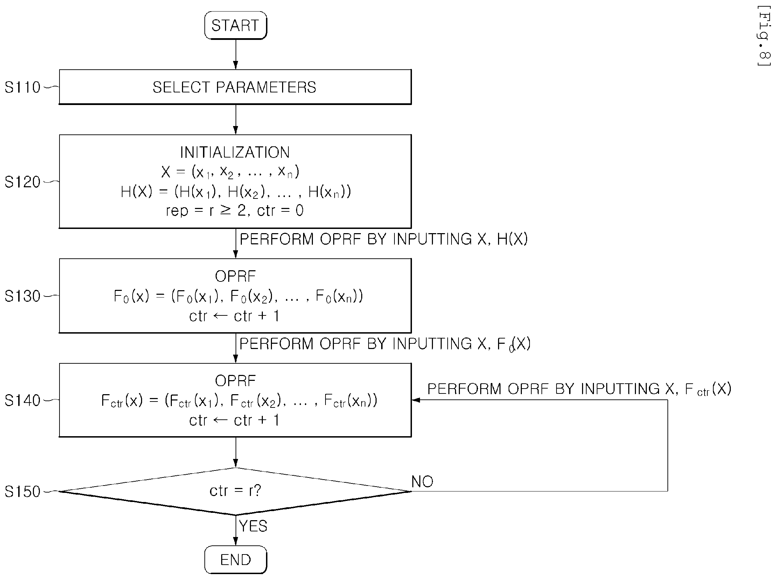

FIG. 8 is a flowchart illustrating a method for multiple applications of an oblivious pseudo-random function protocol between a receiver and a sender based on an oblivious key-value store algorithm according to an embodiment of the present disclosure. Here, respective steps in FIG. 8 may be performed by a receiver according to an embodiment of the present disclosure.

Referring to FIG. 8, the receiver may configure a first bit count, which is the number of bits of hash data, and a second bit count, which is the number of bits of first PRF data, based on the probability bound for information leakage in the first OPRF protocol and the second OPRF protocol (S110). That is, an administrator of the OPRF protocol or the PSI protocol may configure various parameters, such as the first bit count and the second bit count, for multiple applications of the OPRF protocol using the receiver.

Specifically, the first bit count may be configured using a first probability bound, which is the probability that, when an attacker generates up to q pieces of arbitrarily computed hash data, $n_1$ pieces of arbitrarily computed hash data or more among them match an OKVS decoding result. That is, the number of bits of hash data to keep the first probability bound at or below a threshold may be calculated and configured as the first bit count.

Specifically, the receiver may configure the first bit count using the first probability bound below.

$$p_1 \leq \frac{\binom{q}{n_1}}{2^{(n_1-m)\ell_1}}$$

Here, $p_1$ may be the first probability bound, q may be the maximum number of pieces of arbitrarily computed hash data that the attacker is able to generate using hash operation, $n_1$ may be the number of pieces of arbitrarily computed hash data that matches the OKVS decoding result, m may be the number of rows of the OKVS matrix generated in the first OPRF protocol, and $\ell_1$ may be the number of bits of the hash data. Here, q, the maximum number of pieces of arbitrarily computed hash data, may be configured according to a preset computational security parameter, and the threshold may be configured according to a statistical security parameter. In addition, $n_1$ may be a value arbitrarily configured to be greater than n when the number of first key-value pairs is n.

When q, $n_1$, and m are given as described above, the receiver may obtain the number of bits $\ell_1$ of hash data to keep the first probability bound at or below the threshold. Here, the minimum value of the number of bits of hash data that keeps the first probability bound at or below the threshold may be obtained, and then the minimum value may be configured as a first bit count.

In addition, the receiver, using a second probability bound indicating the probability that, when the attacker generates up to $n_1$ pieces of arbitrarily computed first PRF data, $n_2$ pieces of arbitrarily computed first PRF data or more among them match the OKVS decoding results, may configure a second bit count to keep the second probability bound at or below the threshold. In this case, $n_2$ may have a value smaller than $n_1$.

Specifically, the second probability bound may be obtained as follows.

$$p_2 \leq \frac{\binom{n_1}{n_2}}{2^{(n_2-m)\ell_2}}$$

Here, $p_2$ may be the second probability bound, $n_1$ may be the maximum number of pieces of arbitrarily computed first PRF data that the attacker is able to generate, $n_2$ may be the number of pieces of arbitrarily computed first OPRF data that matches the OKVS decoding result, m may be the number of rows of the OKVS matrix generated in the second OPRF protocol, and $\ell_2$ may be the number of bits of the first OPRF data.

When $n_1$, $n_2$, and m are given, the receiver may obtain the number of bits $\ell_2$ of the first PRF data to keep the second probability bound at or below the threshold. That is, the minimum value of the number of bits of the first PRF data that keeps the second probability bound at or below the threshold may be obtained, and the minimum value may be configured as a second bit count. In addition, the receiver may obtain the first bit count and the second bit count according to $n_1$, respectively, while changing $n_1$, and configure $n_1$, the first bit count, and the second bit count, respectively, so that the sum of the first bit count and the second bit count becomes the minimum value.

Thereafter, the receiver may perform initialization for performing the OKVS-based OPRF (S120). That is, the receiver may collect target data $X = (x_1, ... , x_n)$ such as identifying information or the like, and input the target data into a hash function to generate the corresponding hash data $H(X) = (H(x_1), ... , H(x_n))$. In addition, the number of repetitions (rep) may be configured as at least 2 or more, and the repetition count (ctr) may be configured as 0 for initialization.

After initialization, the receiver may input a first key-value pair between the target data and the hash data corresponding to the target data, and receive first PRF data generated according to the first OPRF protocol based on the OKVS (S130). When the first OPRF protocol is completed, the repetition count (ctr) may be increased. Since the specific operation of the first OPRF protocol has been described above, a detailed description thereof will be omitted here.

After that, the receiver may input a second key-value pair between the target data and the first PRF data, and receive second PRF data generated according to the second OPRF protocol based on the OKVS (S140). That is, instead of hash data, a second key-value pair between the first PRF data generated in the first OPRF protocol and the target data may be generated, and the second OPRF protocol may be performed based on this. When the second OPRF protocol is completed, the repetition count (ctr) may be increased. Since the specific operation of the second OPRF protocol has been described above, a detailed description thereof will be omitted here.

Thereafter, the receiver may identify whether the repetition count (ctr) reaches a preset repetition count (r) (S150). If r is 2, since ctr = r = 2, the receiver may stop the multiple applications of OPRF. However, if r is 3, the OPRF protocol may be further applied. That is, the receiver may input a third key-value pair between the target data and the second PRF data, and through this, the receiver may further receive third PRF data generated according to the third OPRF protocol based on the OKVS. Depending on the repetition count r, the OPRF protocol may be repeatedly applied in the same manner.

The present disclosure described above may be implemented as a computer-readable code on a medium in which a program is recorded. The computer-readable medium may be a medium that continuously stores a computer-executable program or temporarily stores it for execution or download. In addition, the medium may be a variety of recording means or storage means in the form of a single piece of hardware or a combination of multiple pieces of hardware, and is not limited to a medium directly connected to a computer system, but may also be distributed on a network. Examples of the medium include a magnetic medium such as a hard disk, a floppy disk, and a magnetic tape, an optical recording medium such as a CD-ROM and a DVD, a magneto-optical medium such as a floptical disk, a ROM, a RAM, a flash memory, or the like, which are configured to store program instructions. In addition, another example of the medium may include a record medium or storage medium managed by App store that distribute applications, or other sites and servers that supply or distribute various software. Accordingly, the above detailed description should not be construed as restrictive in all respects but should be considered illustrative. The scope of the present disclosure should be determined by a reasonable interpretation of the appended claims, and all changes equivalent to the present disclosure are included in the scope of the present disclosure.

The present disclosure is not limited to the above-described embodiments and the attached drawings. It will be apparent to a person skilled in the art to which the present disclosure pertains that components according to the present disclosure may be substituted, modified, and changed without departing from the technical idea of the present disclosure.

**Claims**

**1.** A method for multiple applications of an oblivious pseudo-random function (OPRF) protocol between a receiver and a sender based on an oblivious key-value store (OKVS) algorithm, the method comprising:

inputting, by the receiver, a first key-value pair between target data and hash data corresponding to the target data to receive first PRF data generated according to a first OPRF protocol based on the OKVS; and
inputting, by the receiver, a second key-value pair between the target data and the first PRF data to receive second PRF data generated according to a second OPRF protocol based on the OKVS.

**2.** The method for multiple applications of an oblivious pseudo-random function protocol of claim 1, further comprising configuring, by the receiver, a first bit count, which is the number of bits of the hash data, and a second bit count, which is the number of bits of the first PRF data, based on a probability bound for information leakage in the first OPRF protocol and the second OPRF protocol.

**3.** The method for multiple applications of an oblivious pseudo-random function protocol of claim 2,

wherein the configuring comprises
configuring the first bit count and the second bit count such that the sum of the first bit count and the second bit count becomes a minimum value.

4. The method for multiple applications of an oblivious pseudo-random function protocol of claim 2,

wherein the configuring comprises
configuring, using a first probability bound indicating a probability that, when an attacker generates up to q pieces of arbitrarily computed hash data, $n_1$ pieces of arbitrarily computed hash data or more among them match an OKVS decoding result, the first bit count to keep the first probability bound at or below a threshold.

5. The method for multiple applications of an oblivious pseudo-random function protocol of claim 4,
wherein, when the number of the first key-value pairs input by the receiver is n, the $n_1$ has a value greater than n ($n_1 >$ n).

6. The method for multiple applications of an oblivious pseudo-random function protocol of claim 4,

wherein the configuring comprises
obtaining the number of bits $\ell_1$ of the hash data to keep the first probability bound at or below the threshold when q, $n_1$, and m are given for an equation,

$$p_1 \leq \frac{\binom{q}{n_1}}{2^{(n_1-m)\ell_1}}$$

, where $p_1$ is the first probability bound, q is a maximum number of pieces of arbitrarily computed hash data that an attacker is able to generate using hash operation, $n_1$ is the number of pieces of arbitrarily computed hash data that matches the OKVS decoding result, m is the number of rows of an OKVS matrix generated in the first OPRF protocol, and $\ell_1$ is the number of bits of the hash data.

7. The method for multiple applications of an oblivious pseudo-random function protocol of claim 6,
wherein q that is the maximum number of pieces of arbitrarily computed hash data is configured according to a preset computational security parameter, and the threshold is configured according to a statistical security parameter.

8. The method for multiple applications of an oblivious pseudo-random function protocol of claim 6,
wherein the configuring comprises:

obtaining a minimum value of the number of bits of the hash data to keep the first probability bound at or below the threshold; and
configuring the minimum value as the first bit count.

9. The method for multiple applications of an oblivious pseudo-random function protocol of claim 4,

wherein the configuring comprises
configuring, using a second probability bound indicating a probability that, when an attacker generates up to $n_1$ pieces of arbitrarily computed first PRF data, $n_2$ pieces of arbitrarily computed first PRF data or more among them match an OKVS decoding result, the second bit count to keep the second probability bound at or below a threshold.

10. The method for multiple applications of an oblivious pseudo-random function protocol of claim 9,
wherein the $n_2$ has a value smaller than the $n_1$ ($n_1 > n_2$).

11. The method for multiple applications of an oblivious pseudo-random function protocol of claim 9,

wherein the configuring comprises
obtaining the number of bits $\ell_2$ of the first PRF data to keep the second probability bound at or below the threshold when $n_1$, $n_2$, and m are given for an equation,

$$p_2 \leq \frac{\binom{n_1}{n_2}}{2^{(n_2-m)\ell_2}}$$

, where $p_2$ is the second probability bound, $n_1$ is a maximum number of pieces of arbitrarily computed first PRF data that an attacker is able to generate, $n_2$ is the number of pieces of arbitrarily computed first OPRF data that matches the OKVS decoding result, m is the number of rows of an OKVS matrix generated in the second OPRF protocol, and $\ell_2$ is the number of bits of the first OPRF data.

12. The method for multiple applications of an oblivious pseudo-random function protocol of claim 11, wherein the configuring comprises:

obtaining a minimum value of the number of bits of the first PRF data to keep the second probability bound at or below the threshold; and
configuring the minimum value as the second bit count.

13. The method for multiple applications of an oblivious pseudo-random function protocol of claim 9, wherein the configuring comprises:

obtaining the first bit count and the second bit count according to respective values of $n_1$ while changing $n_1$; and
configuring the $n_1$, the first bit count, and the second bit count so that the sum of the first bit count and the second bit count becomes a minimum value.

14. The method for multiple applications of an oblivious pseudo-random function protocol of claim 1, further comprising inputting, by the receiver, a third key-value pair between the target data and the second PRF data to receive third PRF data generated according to a third OPRF protocol based on the OKVS.

15. A receiver comprising a processor and configured to repeatedly perform an oblivious pseudo-random function (OPRF) protocol between the receiver and a sender based on an oblivious key-value store (OKVS) algorithm, wherein the processor is configured to:

input a first key-value pair between target data and hash data corresponding to the target data to receive first PRF data generated according to a first OPRF protocol based on the OKVS; and
input a second key-value pair between the target data and the first PRF data to receive second PRF data generated according to a second OPRF protocol based on the OKVS.

[Fig.1]

```
        200                  PSI PROTOCOL            100
  ┌──────────────┐      ────────────────────▶  ┌──────────────┐
  │              │                             │              │
  │   SENDER     │                             │  RECEIVER    │
  │              │      ◀────────────────────  │              │
  └──────────────┘                             └──────────────┘
```

[Fig.2]

[Fig.3]

RECEIVER                           SENDER

A ——————→ ┌─────────┐ ←—————— B
          │   PSI   │
A ∩ B ←—— └─────────┘

[Fig.4]

RECEIVER                           SENDER

A ——————→ ┌─────────┐ ←—————— B
          │   PSI   │
A' ∩ B ←—— └─────────┘

[Fig.5]

[Fig.6]

SENDER ~200

RECEIVER ~100

$\{x_i, H_1(x_i)\}_{i=1,\dots,n}$

LINEAR OKVS ~S11

P

LINEAR CODE ~S12

C(P)

VOLE ~S13

$W = V + \Delta * U$

V, U

W, $\Delta$

$U' = C(P) - U$

$U'$

$W' = W + \Delta * U'$

PRF KEY : $W'$, $\Delta$

PRF RESULTS : $H_2(x_i, Dcd(V, x_i))$

[Fig.7]

<u>10</u>

[Fig. 8]

EP 4 708 765 A1

```
                          ( START )
                              │
                              ▼
        ┌──────────────────────────────────────────┐
S110 ───┤            SELECT PARAMETERS              │
        └──────────────────────────────────────────┘
                              │
                              ▼
        ┌──────────────────────────────────────────┐
        │              INITIALIZATION               │
        │        X = (x₁, x₂, … , xₙ)               │
S120 ───┤  H(X) = (H(x₁), H(x₂), … , H(xₙ))         │
        │          rep = r ≥ 2, ctr = 0             │
        └──────────────────────────────────────────┘
                              │ PERFORM OPRF BY INPUTTING X, H(X)
                              ▼
        ┌──────────────────────────────────────────┐
        │                  OPRF                     │
S130 ───┤   F₀(x) = (F₀(x₁), F₀(x₂), … , F₀(xₙ))    │
        │             ctr ← ctr + 1                 │
        └──────────────────────────────────────────┘
                              │ PERFORM OPRF BY INPUTTING X, F₀(X)
                              ▼
        ┌──────────────────────────────────────────┐        PERFORM OPRF BY INPUTTING X, F ctr(X)
        │                  OPRF                     │
S140 ───┤ F ctr(x) = (F ctr(x₁), F ctr(x₂), … , F ctr(xₙ)) │◄──────────────────────┐
        │             ctr ← ctr + 1                 │                               │
        └──────────────────────────────────────────┘                               │
                              │                                                     │
                              ▼                                                     │
                    ╱──────────────────╲          NO                                │
S150 ──────────────╱      ctr = r?      ╲──────────────────────────────────────────┘
                    ╲──────────────────╱
                              │ YES
                              ▼
                          ( END )
```

Europäisches
Patentamt

European
Patent Office

Office européen
des brevets

# EUROPEAN SEARCH REPORT

**Application Number**

EP 25 19 7010

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARON VAN BAARSEN ET AL: "Fuzzy Private Set Intersection with Large Hyperballs", IACR, INTERNATIONAL ASSOCIATION FOR CRYPTOLOGIC RESEARCH , vol. 20240226:132613 26 February 2024 (2024-02-26), pages 1-44, XP061086108, Retrieved from the Internet: URL:https://eprint.iacr.org/archive/2024/330/1708953973.pdf [retrieved on 2024-02-27] * sections 3.1 and 7; figure 9 * | 1-15 | INV. H04L9/08 H04L9/00 |
| A,D | PINKAS BENNY ET AL: "PSI from PaXoS: Fast, Malicious Private Set Intersection", 1 May 2020 (2020-05-01), ADVANCES IN CRYPTOLOGY - EUROCRYPT 2020; [LECTURE NOTES IN COMPUTER SCIENCE; LECT.NOTES COMPUTER], SPRINGER INTERNATIONAL PUBLISHING, CHAM, PAGE(S) 739 - 767, XP047659268, ISSN: 0302-9743 ISBN: 978-3-030-45723-5 [retrieved on 2020-05-01] * section 4 * | 1-15 | TECHNICAL FIELDS SEARCHED (IPC) H04L |

-/--

The present search report has been drawn up for all claims

| Place of search | Date of completion of the search | Examiner |
|---|---|---|
| Munich | 22 January 2026 | Manet, Pascal |

EPO FORM 1503 03.82 (P04C01)

Europäisches
Patentamt

European
Patent Office

Office européen
des brevets

**EUROPEAN SEARCH REPORT**

**Application Number**

**EP 25 19 7010**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALEXANDER BIENSTOCK ET AL: "Near-Optimal Oblivious Key-Value Stores for Efficient PSI, PSU and Volume-Hiding Multi-Maps", IACR, INTERNATIONAL ASSOCIATION FOR CRYPTOLOGIC RESEARCH , vol. 20230610:035413 10 June 2023 (2023-06-10), pages 1-38, XP061078338, Retrieved from the Internet: URL:https://eprint.iacr.org/archive/2023/903/1686369253.pdf [retrieved on 2023-06-12] * the whole document * | 1-15 | |

TECHNICAL FIELDS
SEARCHED     (IPC)

The present search report has been drawn up for all claims

| Place of search | Date of completion of the search | Examiner |
|---|---|---|
| Munich | 22 January 2026 | Manet, Pascal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240117017

- KR 1020250091679

**Non-patent literature cited in the description**

- PSI from PaXoS: fast, malicious private set intersection.. **PINKAS, BENNY et al.** Annual International Conference on the Theory and Applications of Cryptographic Techniques. Springer International Publishing, 2020

- VOLE-PSI: fast OPRF and circuit-PSI from vector-OLE.. **RINDAL, PETER** ; **PHILLIPP SCHOPP-MANN**. Annual International Conference on the Theory and Applications of Cryptographic Techniques. Springer International Publishing, 2021